# EUROPÄISCHE PATENTSCHRIFT

(11) **EP 1 174 338 B1**
(45) Veröffentlichungstag und Bekanntmachung des Hinweises auf die Patenterteilung: **20.10.2004**
(21) Anmeldenummer: 01116688.1
(22) Anmeldetag: 17.07.2001
(51) Int. Cl.: B64C 27/473, B64C 27/467, B64C 27/615

(54) **Rotorblatt mit Steuerklappen**
Rotor blade comprising ailerons
Pale de rotor à volet orientable

(30) Priorität: 20.07.2000 DE 10035333
(43) Veröffentlichungstag der Anmeldung: 23.01.2002
(73) Patentinhaber: EADS Deutschland GmbH, 81663 München (DE)
(72) Erfinder: Lorkowski, Thomas, 82008 Unterhaching (DE); Hermle, Frank, 81673 München (DE)

(56) Entgegenhaltungen:
- EP-A- 0 601 527
- EP-A- 0 734 947
- EP-A- 0 947 422
- FR-A- 2 770 826
- GB-A- 2 299 562
- US-A- 2 716 460

## Beschreibung

Die Erfindung betrifft ein Rotorblatt für einen Helikopter mit einer im wesentlichen im Umriß des Blattprofils integrierten, auf einer Drehachse schwenkbar gelagerten aerodynamischen Steuerklappe, insbesondere Wölbklappe, an welcher außerhalb der Drehachse ein Steuermittel, insbesondere eine Steuerstange, zur Umsetzung einer Linearbewegung in eine Schwenkbewegung der Steuerfläche angelenkt ist.

Helikopter zeichnen sich gegenüber konventionellen Flugzeugen durch viele Vorteile aus. Das vertikale Starten und Landen erlaubt ein Manövrieren in örtlich begrenzten Gebieten. Durch die Fähigkeit, mit geringer Geschwindigkeit zu fliegen, kann der Helikopter für Überwachungsaufgaben eingesetzt werden. Die Möglichkeit des Schwebefluges prädestiniert den Helikopter als Einsatzgerät bei Rettungsaufgaben.

Der vertikale Auftrieb und der Vortrieb wird durch die Rotation der Rotorblätter um den Rotormast hervorgerufen, indem die Rotorblätter einen Auftrieb generieren, der je nach Stellung gegenüber dem Rotormast gerichtet ist. Die Stellung der Rotorblätter und somit der Auf- und Vortrieb des Helikopters ist normalerweise durch Verdrehen der Rotorblätter längs einer Achse in Spannweitenrichtung durch eine Taumelscheibe und ein zwischen dieser und dem Rotorblatt befindlichen Gestänge gewährleistet. Alternativ hierzu ist es möglich, die Stellung der Rotorblätter über Steuerklappen zu beeinflussen. Ein Verschwenken der Steuerklappen führt zur Änderung des Anströmverhaltens der Luft.

Dabei können als Steuerklappen Servoklappen an der Profilhinterkante benutzt werden, um das typische, schlagende Geräusch der Rotorblätter zu reduzieren. Dieses entsteht durch die Wechselwirkung der Rotorblätter mit Luftwirbeln, die sich vom vorangegangenen Rotorblatt ablösen. Servoklappen werden auf diesem Gebiet eingesetzt, um die Aerodynamik der Wechselwirkung zu mindern, in dem die Luftwirbel durch eine leichte Anstellung und Anziehung abgeschwächt und weiter nach außen abgestoßen werden.

Durch ein Heben und Senken einer als Wölbklappe an der Profilvorderkante angebrachten Steuerklappe werden die hohen Saugspitzen an der Profilvorderkante beim rücklaufenden Rotorblatt reduziert, womit die Strömungsablösung in dieser Phase verzögert und die Hystereseschleifen im Verlauf der aerodynamischen Koeffizienten verkleinert werden. Eine diskrete Wölbklappe an der Profilvorderkante erlaubt zudem die bei einer kontinuierlichen Konturvariation zur elastischen Verformung benötigte Energie für die Überwindung der aerodynamischen Kräfte und Momente einzusetzen oder eine größere Bewegungsautorität bereitzustellen.

Aus T. Lorkowski, P. Jänker, F. Hermle, S. Storm, M. Christmann, "Konzeptentwicklung einer piezoaktuatorisch angetriebenen Vorderkantenklappe zur Dynamic-Stall-Verzögerung", DGLR-Jahrestagung 27.-30. September 1999, ist eine Wölbklappe an der Profilvorderkante bekannt, bei der die Kraft eines Piezoaktors über eine Druckstange auf einen Klappenanlenkpunkt übergeht. Dieser liegt oberhalb der Drehachse der Wölbklappe, so daß über die Hebelanordnung die Klappe bei einer Vorwärtsbewegung der Druckstange nach unten und bei einer Rückwärtsbewegung nach oben geschwenkt wird. Je nach Hebelarm (Abstand zwischen Klappenanlenkpunkt und Drehachse) und Weg der Druckstange sind so unterschiedliche Ausschläge möglich.

Problematisch zeigt sich bei einer derartigen Anordnung, daß es bei einer einfachen Lagerung der Druckstange am Klappenanlenkpunkt aufgrund der im Betrieb herrschenden Fliehkräfte bis zu 1000 g und der Last in der Druckstange zu einem Verkanten des Lagers und somit zu einem eingeschränkten Betrieb kommt. Die Wölbklappe wird während eines Rotorumlaufs mehrfach auf und ab bewegt, so daß es unter den hohen Belastungen bei einer einfachen Lagerung zu einer Abnutzung der Komponenten kommt. Dies hat neben einem erhöhten Energieeintrag für die Bewegung der Klappe zur Folge, daß durch das dadurch erhöhte Spiel der Lagerung ein Verkanten noch schneller eintreten kann.

Aus der Druckschrift EP 0 734 947 A1 ist ein Rotorblatt mit schwenkbarer Klappe bekannt, wobei die Schwenkachse der Klappe parallel zu einer Linie ist, die durch den Drehpunkt des Rotors und den Schwerpunkt der Klappe verläuft.

Ferner beschreibt EP 0 947 422 A2 eine Antriebsvorrichtung für eine Rotorblattklappe. Die Klappe ist auf einer Drehachse schwenkbar gelagert und außerhalb der Drehachse sind Steuermittel angelenkt, welche mit einem Übertragungselement verbunden sind, so dass eine Linearbewegung des Steuermittels in eine Schwenkbewegung der Klappe umgesetzt wird. Zudem weist die Vorrichtung ein in Spannweitenrichtung ausgerichteten Bolzen auf, welcher mittels Wälzlagern gelagert ist.

Der Erfindung liegt daher die Aufgabe zugrunde, ein Rotorblatt mit einer aerodynamischen Steuerklappe anzugeben, bei der die Klappe mit hohen Stellgeschwindigkeiten im Betrieb bei einer Fliehkraftbelastung von bis zu 1000 g mittels eines Steuermittels angesteuert werden kann, ohne daß es zu einem Verkanten des Steuermittels und der Steuerfläche kommt. Für eine wartungsarme Auslegung soll außerdem die Abnutzung der einzelnen Komponenten gering sein.

Zur Lösung der Aufgabe ist ein Rotorblatt der eingangs beschriebenen Art erfindungsgemäß dadurch gekennzeichnet, dass das Steuermittel über Wälzlager und in Spannweitenrichtung ausgerichteten Bolzen gelagert ist und Mittel gemäß Anspruch 1 vorgesehen sind, welche sich aus der Rotation des Rotorblatts ergebende Fliehkräfte des Steuermittels über die Steuerklappe aufnehmen.

Durch die Übertragung der Bewegungsenergie des Steuermittels auf Bolzen, die mittels Wälzlager gelagert sind, ist die Gefahr eines Verkantens geringer als bei einer einfachen Punktlagerung. Hinzu kommt, dass die Fliehkräfte über Mittel der Steuerklappe aufgenommen werden, so dass selbst bei unterschiedlichen Fliehkraftbelastungen eine stabile Ansteuerung der Steuerklappe ohne Spiel gewährleistet. Da die gewählte Einstellung der einzelnen Komponenten des Steuervorrichtung untereinander nicht verändert wird, ist ein Verkanten nahezu unmöglich. Hierdurch verringert sich auch die Abnutzung der einzelnen Komponenten.

Die Mittel zur Aufnahme der Fliehkräfte bestehen in einer Ausführungsform aus einem zwischen Steuermittel und Steuerklappe angebrachten Axiallager, insbesondere einem Axialkugellager und einer Feder, die unter Vorspannung ständig den abzustützenden Teil des Steuermittels gegen das Axiallager drückt. Durch das Axiallager wird die Reibung zwischen Steuerklappe und abzustützendem Bereich auf ein Minimum reduziert, wodurch von der Aktorik weniger Energie zur Bewegung der Steuerklappe aufgebracht werden muß. Das Axiallager ist vorteilhafterweise ein Axialkugellager, es können aber sämtliche Lager eingesetzt werden, die die Reibung zwischen den Komponenten verringern. Die Feder verhindert bei geringen Fliehkräften ein Lagerspiel des Axiallagers und sichert gegen ein Verschieben des Axiallagers. So ist auch bei geringen Fliehkräften kein Lagerspiel vorhanden und ein Verkanten wird unterbunden. Bevorzugt ist die Feder um den Bolzen herum angebracht, so dass dieser ein verrutschen der Feder verhindert.

Die Übertragung der Bewegung des Steuermittels auf die Klappe ist bevorzugt über ein Gehäuse bewerkstelligt. Über dieses wird die Linearbewegung über darin integrierte Wälzlager auf einen Bolzen übertragen. Die Lagerung des Bolzens an der Steuerklappe bewirkt daraufhin ein Verschwenken der Steuerklappe.

Vorteilhafterweise ist der Bolzen in klappenseitigen Lageraugen verschraubt. Hierdurch ist eine leichte Montage und im Bedarfsfall ein leichter Austausch möglich. Sollten Umstände durch eine besondere Belastung vorliegen, die ein Verschweißen oder Kleben notwendig machen, ist dies natürlich auch möglich.

Bei einer weiteren Ausführungsform bestehen die Mittel zur Aufnahme der Fliehkräfte aus einer in der Stirnfläche des Bolzens befindlichen Wälzlagerkugel und einer hiermit in Wirkverbindung stehenden, mit der Steuerklappe kraftschlüssig verbundenen, Hohlpfanne. Das Steuermittel wird somit über den Bolzen über den die Anlenkung an die Steuerklappe gewährleistet ist, gegenüber diesen abgestützt. Die Punktlagerung der Kugel in der Hohlpfanne weist einen geringen Reibungsverlust auf und besitzt von Natur aus kein Lagerspiel.

Vorzugsweise ist der Radius der Hohlpfanne größer gewählt als der Radius der Wälzlagerkugel, wobei auch elliptische Abschnitte möglich sind. Hierdurch ist eine leichtgängige Punktlagerung gewährleistet, durch die eine Verschiebung des Steuergestänges in Spannweitenrichtung unterbunden wird, die bei der Bewegung wenig Energie in Reibung und Wärme umwandelt.

Vorteilhafterweise besteht die Hohlpfanne aus synthetischem Saphir, während die Wälzlagerkugel aus Stahl besteht. Natürlich ist es auch möglich, eine Hohlpfanne aus einem anderen Lagerstein, wie beispielsweise Rubin, einzusetzen. Auch dieses Material verschweißt bei Reibung nicht mit der Wälzlagerkugel.

Die Übertragung der Bewegung des Steuermittels auf die Klappe wird bei einer weiteren vorteilhaften Ausgestaltung über zwei Bolzen an einer Gabel bewirkt, wodurch die Ansteuerachse unterbrochen ist. Die Bolzen sind dabei über Wälzlager in der Steuerklappe gelagert. Hierdurch entsteht zwischen den Flanken der Gabel Bauraum, der in der niederen Bauhöhe des Rotorblattes genutzt werden kann. Beispielsweise kann in dem Bauraum ein Gehäuse gemäß einer anderen Ausführungsform angebracht sein, womit für die Umsetzung der Bewegung des Steuermittels in eine Richtung das Gehäuse vorgesehen ist, während für die Umsetzung der Bewegung des Steuermittels in die andere Richtung eine Gabel verwendet werden kann.

Die Bolzen können mit der Gabel verschweißt oder verklebt sein, vorteilhafterweise sind die Bolzen aber mit der Gabel verschraubt. Hierdurch ist im Bedarfsfall ein leichtes Auswechseln der beanspruchten Komponenten gewährleistet, ohne dass ein großer Reparaturaufwand betrieben werden muß.

Die Wälzlager sind bevorzugt auf der in Spannweitenrichtung äußeren Seite mit unsymmetrischen Wellendichtringen abgedichtet. Hierdurch wird die unter Fliehkraft stehende Masse des eingebrachten Wälzlagerfetts durch die projezierte Fläche der Dichtung zurückgehalten.

Vorteilhafterweise sind die Wälzlager Nadellager.

Bevorzugt sind die Hohlpfanne und die Bolzen bzw. Wälzlager aufnehmenden Lageraugen Einsätze, die bei der Montage in Bohrungen/Öffnungen der Steuerklappe formschlüssig eingeschoben werden können, wofür ihre äußere Kontur den Bohrungen angepaßt sein muß. Diese Einsätze können mit weiteren Einsätzen und Kontermuttern in ihrer Lage in der Steuerklappe genau fixiert und positioniert werden, so daß das Spiel aller Lager minimiert wird. Außerdem ist im Bedarfsfall in einfaches Auswechseln möglich.

Die Erfindung wird im folgenden anhand zweier in Zeichnungen dargestellter Ausführungsbeispiele näher beschrieben, aus denen sich weitere Einzelheiten, Merkmale und Vorzüge ergeben. Es zeigt
Fig. 1 eine schematische Aufsicht auf ein Rotorblatt mit einer an der Profilvorderkante angebrachten Steuerklappe (Wölbklappe) mit einem Gehäuse zur Umsetzung der Bewegung einer Steuerstange, bei der auch die in das Rotorblatt integrierte Komponenten sichtbar dargestellt wurden.
Fig. 2 eine schematische Aufsicht auf ein Rotorblatt mit einer an der Vorderkante angebrachten Steuerfläche (Wölbklappe) mit einer Gabel zur Umsetzung der Bewegung einer Steuerstange, bei der auch die in das Rotorblatt integrierten Komponenten sichtbar dargestellt wurden.

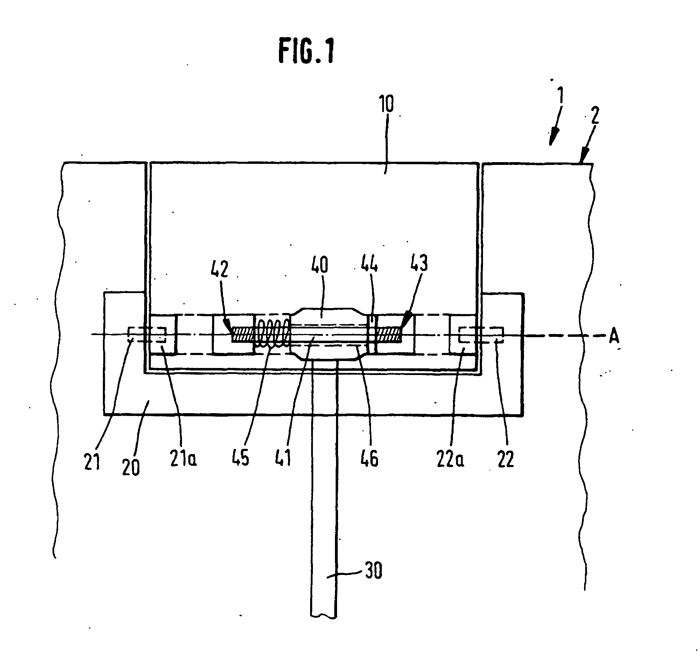

Bei dem in Figur 1 dargestellten Rotorblatt 1 wurde an der Profilvorderkante 2 eine Wölbklappe 10 in das Profil des Rotorblattes 1 integriert. Der Umriß dieser Wölbklappe 10 entspricht dem Umriß des Blattprofils. Die Wölbklappe 10 ist im vorliegenden Ausführungsbeispiel in einen Rahmen 20 integriert, der mit dem Rotorblatt 1 verbunden ist. In dem Rahmen 20 ist die Wölbklappe 10 schwenkbar gelagert. Hierzu bilden zwei Stifte 21, 22 die Schwenkachse. Die Stifte 21, 22 sind kraftschlüssig mit dem Rahmen 20 verbunden. Die Wölbklappe 10 lagert auf den Stiften über Lager 21a, 22a. Oberhalb der Schwenkachse der Wölbklappe 10 befindet sich die Anlenkachse A der Steuerstange 30. Die Steuerstange 30 wird von einer internen Aktorik (hier nicht dargestellt) vor- und zurückbewegt. Durch den Hebel zwischen Schwenkachse und Anlenkachse A resultiert hieraus eine Schwenkbewegung der Wölbklappe 10 nach oben bzw. unten. Zur Umsetzung der Längsbewegung der Steuerstange 30 auf die Anlenkachse A ist die Steuerstange 30 mit dem Gehäuse 40 kraftschlüssig verbunden. In dem Gehäuse 40 befindet sich in einem Nadellager 46 ein Bolzen 41, der die Bewegung der Steuerstange 30 aufnimmt und an die Wölbklappe 10 zum Schwenken weitergibt. Hierfür ist der Bolzen 41 in zwei, mit der Wölbklappe 10 verbundenen Lageraugen 42, 43 verschraubt. Zur Eliminierung des Spiels und Reduzierung der Reibung befindet sich zwischen dem Gehäuse 40 und dem in Spannweitenrichtung außenliegenden Lagerauge 43 ein Axialkugellager 44. Die um den Bolzen 41 gelegte Feder 45 bewirkt, dass das Gehäuse 40 vom inneren Lagerauge 42 zum äußeren Lagerauge 43 gedrückt wird. Hierdurch ist bei unterschiedlichen Fliehkräften immer eine stabile Lage gewährleistet. Die Lager der Drehachse, die Aufnahmeelemente der Lageraugen, und das Axialkugellager sind hierbei als Einsätze ausgestaltet, die in eine passende Bohrung (gestrichelt dargestellt) geschoben werden. Diese Einsätze können mittels Distanzstücken und Kontermuttern in ihrer Lage bezüglich der Wölbklappe 10 verschoben und fixiert werden, um das Spiel der einzelnen Komponenten untereinander weiter zu minimieren.

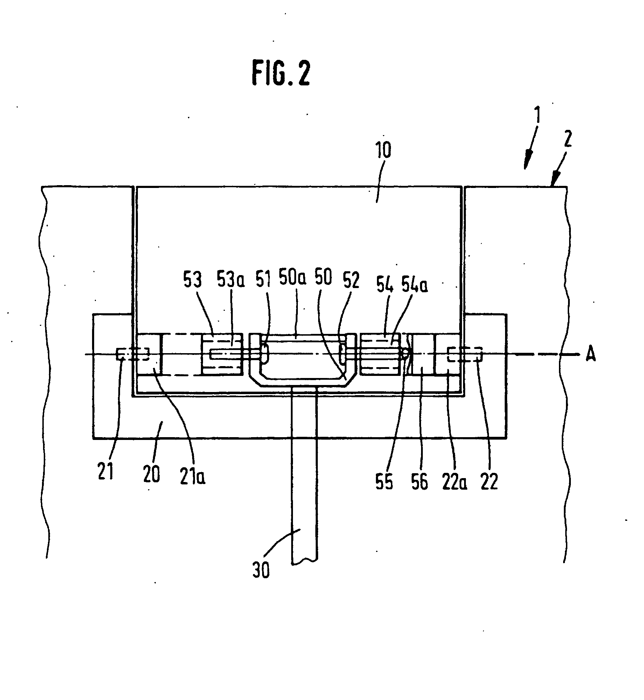

Bei dem in Figur 2 dargestellten Ausführungsbeispiels eines Rotorblattes 1 mit einer in die Profilvorderkante 2 integrierten Wölbklappe 10 ist die Lagerung der Wölbklappe 10 im Rotorblatt 1 über den Rahmen 20 und die Stifte 21, 22 analog der Ausführungsform der Figur 1.

Die Umsetzung der Längsbewegung der Steuerstange 30 auf die Anlenkachse A erfolgt bei diesem Beispiel über eine Gabel 50, in deren Flanken zwei Bolzen 51, 52 in Spannweitenrichtung radial nach außen bzw. innen geschraubt sind. Die somit gebildete Anlenkachse A der Steuerstange 30 ist in der Wölbklappe 10 über zwei Nadellager 53a, 54a gelagert, die mit der Wölbklappe 10 in Wirkverbindung stehen. Hierzu befinden sich die Nadellager 53a, 54a in zwei Einsätzen 53, 54, welche sich wiederum in einer passenden Bohrung (gestrichelt dargestellt) der Wölbklappe 10 befinden. Zwischen den Flanken befindet sich ein Distanzstück 50a, das eine Biegeverformung der Flanken bei hoher Zugbelastung durch die Druckstange 30 vermeidet. Die Abstützung der Gabel 50 gegen die im Betrieb auf sie herrschenden Fliehkräfte geschieht durch eine Wälzlagerkugel 55, welche im äußeren Ende des äußeren Bolzens 52 angebracht ist. Diese Wälzlagerkugel 55 lagert in einer Hohlpfanne 56 aus synthetischem Saphir, welche kraftschlüssig mit der Wölbklappe 10 verbunden ist.

Auch in dieser Ausführungsform sind sämtliche Komponenten wie Hohlpfanne 56, Einsätze zur Wälzlageraufnahme als Einsätze ausgelegt, welche von einer Bohrung in der Wölbklappe 10 aufgenommen werden. Hierdurch ist eine einfache Montage und Reparatur gewährleistet.

Bei der Verwendung von gegeneinander vorgespannten Piezoaktoren und zur Verringerung des Lagespiels der Nadellager kann die Bewegung der Steuerklappe nach oben von einer Steuerstange mit Gehäuse gemäß Figur 1 und die Bewegung nach unten von einer Steuerstange mit Gabel gemäß Figur 2 durchgeführt werden. Die zwei Steuerstangen können dabei ineinander geführt werden. Durch diese Konstellation ist es auch möglich, die in Figur 1 und Figur 2 dargestellten Ausführungsformen, die eine Bewegung der Steuerstange auf die Anlenkachse umlenken, in einer Steuerklappe zu integrieren. Dies kann beispielsweise durch eine Gabel geschehen, die breit genug ist, um ein Gehäuse samt Lageraugen gemäß Figur 1 zwischen den Flanken aufzunehmen.

## Patentansprüche

1. Rotorblatt (1) für einen Helikopter mit einer im wesentlichen im Umriß des Blattprofils integrierten, auf einer Drehachse schwenkbar gelagerten aerodynamischen Steuerklappe (10), insbesondere Wölbklappe, an welcher außerhalb der Drehachse ein Steuermittel (30), insbesondere eine Steuerstange, zur Umsetzung einer Linearbewegung in eine Schwenkbewegung der Steuerklappe (10) angelenkt ist, wobei das Steuermittel (30) kraftschlüssig mit einem Übertragungselement (40; 50) verbunden ist, welches zumindest einen in Spannweitenrichtung ausgerichteten, mittels Wälzlager (46; 53a, 54a) gelagerten Bolzen (41, 51, 52) aufweist, um die Linearbewegung des Steuermittels (30) auf die Steuerklappe (10) zu übertragen, **dadurch gekennzeichnet, dass** ferner Mittel vorgesehen sind, welche sich aus der Rotation des Rotorblattes ergebende Fliehkräfte des Steuermittels (30) über die Steuerklappe (10) aufnehmen, wobei die Mittel zur Aufnahme der Fliehkräfteentweder aus einem zwischen Steuermittel (30) und Steuerklappe (10) angebrachten reibungsverringerndem Lager (44) und einer vorgespannten Feder (45) oder aus einer in einem Bolzen (52) befindlichen Wälzlagerkugel (55) und einer diese abstützende Hohlpfanne (56) besteht.

2. Rotorblatt (1) nach Anspruch 1, **dadurch gekennzeichnet, dass** das zwischen Steuermittel (30) und Steuerklappe (10) angebrachte reibungsvermindernde Lager ein Axiallager (44), insbesondere ein Axialkugellager ist.

3. Rotorblatt (1) nach Anspruch 1 oder 2, **dadurch gekennzeichnet, dass** das Übertragungselement ein Gehäuse (40) ist, in dem das Wälzlager (46) angeordnet ist, so dass das Steuermittel (30) über das Gehäuse (40) mit Wälzlager (46) auf den Bolzen (41) wirkt.

4. Rotorblatt (1) nach Anspruch 3, **dadurch gekennzeichnet, dass** der Bolzen (41) in klappenseitigen Lageraugen (42, 43) verschraubt ist.

5. Rotorblatt (1) nach Anspruch 4, **dadurch gekennzeichnet, dass** das Axialkugellager (44) zwischen dem Gehäuse (40) und dem in Spannweitenrichtung aussen liegenden Lagerauge (43) angeordnet ist.

6. Rotorblatt (1) nach Anspruch 4 oder 5, **dadurch gekennzeichnet, dass** die Feder (45) um den Bolzen (41) herum angebracht ist, so dass das Gehäuse (40) vom inneren Lagerauge (42) zum äusseren Lagerauge (43) gedrückt wird.

7. Rotorblatt (1) nach Anspruch 1, **dadurch gekennzeichnet, dass** die Wälzlagerkugel (55) sich in der Stirnfläche eines Bolzens (52) befindet und in Wirkverbindung mit der Hohlpfanne (56) steht, welche mit der Steuerklappe (10) kraftschlüssig verbunden ist.

8. Rotorblatt (1) nach Anspruch 1 oder 7, **dadurch gekennzeichnet, dass** der Radius der Hohlpfanne (56) größer ist als der Radius der Wälzlagerkugel (55).

9. Rotorblatt (1) nach einem der Ansprüche 1, 7 oder 8, **dadurch gekennzeichnet, dass** die Wälzlagerkugel (55) aus Stahl und die Hohlpfanne (56) aus synthetischem Saphir bestehen.

10. Rotorblatt (1) nach einem der vorangegangenen Ansprüche, **dadurch gekennzeichnet, dass** das Übertragungselement eine zweizinkige Gabel (50) ist, in dem die Wälzlager (53a, 54b) angeordnet sind, so dass das Steuermittel (30) über die zweizinkige Gabel (50) auf über die Wälzlager (53a, 54a) gelagerte Bolzen (51, 52) wirkt.

11. Rotorblatt (1) nach Anspruch 10, **dadurch gekennzeichnet, dass** die Bolzen (51, 52) in der Gabel (50) verschraubt sind.

12. Rotorblatt (1) nach einem oder mehreren der vorangegangenen Ansprüche, **dadurch gekennzeichnet, dass** die Wälzlager (46; 53a, 54a) auf der in Spannweitenrichtung äußeren Seite mit unsymmetrischen Wellendichtringen abgedichtet sind.

13. Rotorblatt (1) nach einem oder mehreren der vorangegangenen Ansprüche, **dadurch gekennzeichnet, dass** die Wälzlager (46; 53a, 54a) Nadellager sind.

14. Rotorblatt (1) nach Anspruch 1 oder 4 bis 9, **dadurch gekennzeichnet, dass** die Hohlpfanne (56) und/oder die Bolzen (41; 51, 52) oder Wälzlager (46; 53a, 54a) aufnehmenden Lageraugen (42, 43, 53, 54) Einsätze sind, deren Kontur derart gestaltet ist, dass sie formschlüssig in Bohrungen der Steuerklappe passen.

## Claims

1. Rotor blade (1) for a helicopter with an aerodynamic control flap (10), substantially integrated in the contour of the blade profile and held swivellabley on a hinge pin, in particular a camber flap, to which, outside the hinge pin, a control means (30), in particular a control rod, is linked for converting a linear movement into a swivelling movement of the control flap (10), the control means (30) being connected non-positively to a transmission element (40; 50), which has at least one bolt (41; 51, 52) aligned in the wingspan direction and held by rolling bearings (46; 53a, 54a), for transmitting the linear movement of the control means (30) to the control flap (10), **characterised in that** further provided are means which absorb centrifugal forces of the control means (30) resulting from the rotation of the rotor blade via the control flap (10), the means for absorbing the centrifugal forces consisting either of a friction-reducing bearing (44) mounted between the control means (30) and the control flap (10) and a prestressed spring (45) or,of a rolling bearing ball (55) located in one bolt (52) and a hollow socket (56) supporting it.

2. Rotor blade (1) according to claim 1, **characterised in that** the friction-reducing bearing mounted between the control means (30) and the control flap (10) is an axial bearing (44), in particular an axial ball bearing.

3. Rotor blade (1) according to claim 1 or 2, **characterised in that** the transmission element is a housing (40) in which the rolling bearing (46) is arranged, so that the control means (30) acts on the bolt (41) via the housing (40) with the rolling bearing (46).

4. Rotor blade (1) according to claim 3, **characterised in that** the bolt (41) is screwed into bearing eyes (42, 43) on the flap side.

5. Rotor blade (1) according to claim 4, **characterised in that** the axial ball bearing (44) is arranged between the housing (40) and the bearing eye (43) located outside in the wingspan direction.

6. Rotor blade (1) according to claim 4 or 5, **characterised in that** the spring (45) is mounted round the bolt (41), so that the housing (40) is pressed from the inner bearing eye (42) to the outer bearing eye (43).

7. Rotor blade (1) according to claim 1, **characterised in that** the rolling bearing ball (55) is located in the front face of a bolt (52) and is in active connection with the hollow socket (56) which is connected by non-positive locking to the control flap (10).

8. Rotor blade (1) according to claim 1 or 7, **characterised in that** the radius of the hollow socket (56) is greater than the radius of the rolling bearing ball (55).

9. Rotor blade (1) according to one of claims 1, 7 or 8, **characterised in that** the rolling bearing ball (55) consists of steel and the hollow socket (56) of synthetic sapphire.

10. Rotor blade (1) according to one of the preceding claims, **characterised in that** the transmission element is a two-pronged fork (50), in which the rolling bearings (53a, 54b) are arranged, so that the control means (30) acts via the two-pronged fork (50) on bolts (51, 52) held via the rolling bearings (53a, 54a).

11. Rotor blade (1) according to claim 10, **characterised in that** the bolts (51, 52) are screwed into the fork (50).

12. Rotor blade (1) according to one or more of the preceding claims, **characterised in that** the rolling bearings (46; 53a, 54a) are sealed on the outer side in the wingspan direction by asymmetrical shaft sealing rings.

13. Rotor blade (1) according to one or more of the preceding claims, **characterised in that** the rolling bearings (46; 53a, 54a) are needle bearings.

14. Rotor blade (1) according to claim 1 or 4 to 9, **characterised in that** the hollow socket (56) and/or the bearing eyes (42, 43; 53, 54) accommodating bolts (41; 51, 52) or rolling bearings (46; 53a, 54a) are inserts, the contour of which is configured in such a way that they fit by positive locking into bores in the control flap.

## Revendications

1. Pale de rotor (1) pour un hélicoptère comprenant un volet orientable (10) aérodynamique, notamment un volet cintré, logé de manière pivotante sur un axe de rotation intégré pour l'essentiel dans le contour du profil de pale, volet sur lequel est articulé à l'extérieur de l'axe de rotation, un moyen de commande (30), notamment une tige de commande, pour convertir un mouvement linéaire en un mouvement pivotant du volet orientable (10), le moyen de commande (30) étant relié par liaison de forces à un élément de transmission (40 ; 50) qui présente au moins un boulon (41 ; 51, 52) logé à l'aide de paliers (46 ; 53a ; 54a) et orienté dans le sens de l'envergure pour transmettre le mouvement linéaire du moyen de commande (30) sur le volet orientable (10),
**caractérisée en ce qu'**
en outre des moyens reçoivent par l'intermédiaire du volet orientable (10) des forces centrifuges du moyen de commande (30) résultant de la rotation de la pale de rotor, les moyens pour recevoir les forces centrifuges étant constitués soit par un palier (44) réducteur de frottement disposé entre le moyen de commande (30) et le volet orientable (10) et un ressort (45) précontraint, soit par une rotule de palier (55) située dans un boulon (52) et un coussinet creux (56) soutenant celle-ci.

2. Pale de rotor (1) selon la revendication 1,
**caractérisée en ce que**
le palier réducteur de frottement disposé entre le moyen de commande (30) et le volet orientable (10) est un palier de butée (44), notamment un palier de butée à billes.

3. Pale de rotor (1) selon la revendication 1 ou 2,
**caractérisée en ce que**
l'élément de transmission est un boîtier (40) dans lequel est disposé le palier à roulement (46) de telle sorte que le moyen de commande (30) agit sur le boulon (41) par l'intermédiaire du boîtier (40) avec le palier à roulement (46).

4. Pale de rotor (1) selon la revendication 3,
**caractérisée en ce que**
le boulon (41) est vissé dans les oeillets de palier (42, 43) côté volet.

5. Pale de rotor (1) selon la revendication 4,
**caractérisée en ce que**
le palier de butée à billes (44) est disposé entre le boîtier (40) et l'oeillet de palier (43) situé à l'extérieur dans le sens de l'envergure.

6. Pale de rotor (1) selon la revendication 4 ou 5,
**caractérisée en ce que**
le ressort (45) est disposé autour du boulon (41) de telle sorte que le boîtier (40) est poussé de l'oeillet de palier intérieur (42) vers l'oeillet de palier extérieur (43).

7. Pale de rotor (1) selon la revendication 1,
**caractérisée en ce que**
la rotule de palier (55) se trouve dans la face frontale d'un boulon (52) et est en liaison active avec le coussinet creux (56) relié par forces au volet orientable (10).

8. Pale de rotor (1) selon la revendication 1 ou 7,
**caractérisée en ce que**
le rayon du coussinet creux (56) est supérieur au rayon de la rotule de palier (55).

9. Pale de rotor (1) selon l'une quelconque des revendications 1, 7 ou 8,
**caractérisée en ce que**
la rotule de palier (55) est en acier et le coussinet creux (56) en saphir synthétique.

10. Pale de rotor (1) selon l'une quelconque des revendications précédentes,
**caractérisée en ce que**
l'élément de transmission est une fourche à deux pointes (50) dans laquelle sont disposés les paliers (53a, 54b) de telle sorte que le moyen de commande (30) agit par la fourche à deux pointes (50) sur des boulons (51, 52) logés par l'intermédiaire des paliers (53a, 54a).

11. Pale de rotor (1) selon la revendication 10,
**caractérisée en ce que**
les boulons (51, 52) sont vissés dans la fourche (50).

12. Pale de rotor (1) selon l'une ou plusieurs des revendications précédentes,
**caractérisée en ce que**
les paliers (46 ; 53a, 54a) sont rendus étanches du côté extérieur dans le sens de l'envergure à l'aide de bagues d'étanchéité asymétriques.

13. Pale de rotor (1) selon l'une ou plusieurs des revendications précédentes,
**caractérisée en ce que**
les paliers (46 ; 53a, 54a) sont des paliers à aiguilles.

14. Pale de rotor (1) selon la revendication 1 ou 4 à 9,
**caractérisée en ce que**
les oeillets de palier (42, 43 ; 53, 54) recevant le coussinet creux (56) et/ou les boulons (41 ; 51, 52) ou les paliers (46 ; 53a, 54a) sont des inserts dont le contour s'adapte par complémentarité de formes à des alésages du volet orientable.
